# EUROPEAN PATENT APPLICATION

(11) **EP 0 909 053 A2**
(43) Date of publication of application: **14.04.1999**
(21) Application number: 98117434.5
(22) Date of filing: 15.09.1998
(51) Int. Cl.: H04J 14/02, H04L 12/56

(54) **Optical wave network system and method of constructing the system**

(30) Priority: 16.09.1997 JP 268254/97
(71) Applicant: NEC CORPORATION, Tokyo (JP)
(72) Inventor: Takeshita, Hitoshi c/o NEC Corporation, Tokyo (JP); Henmi, Naoya c/o NEC Corporation, Tokyo (JP)
(74) Representative: VOSSIUS & PARTNER

(57) **Abstract**

An optical wave network system is constructed of four layers of a multimedia service layer(101), an ATM layer (102), an optical layer (103), and an optical fiber network layer (104), and the optical layer(103)converts electric signals into optical signals having appropriate carrier wavelengths and has a function for conducting multiplexing of the optical signals having a plurality of carrier wavelengths, and allocates wavelengths connection by connection between points and conducts signal transmission every wavelength path, and this layer is characterized in that there is no restriction in a format of a signal to be handled and that the layer does not depend on a transmission speed, and moreover, the optical layer monitors a trouble or quality of the wavelength paths in order to take measures for a physical trouble of the network, and in case that a wavelength path connection trouble or wavelength path deterioration occurs, the optical layer conducts high speed protection and physically recovers the trouble of the network at high speed.

## Description

The present invention relates to a wavelength multiplex technique in optical communication or optical exchange, and more particularly to a signal multiplex method for efficiently providing multimedia service by constructing an economical and pliable network, and an optical communication or optical exchange system utilizing the method.

A wavelength division multiplexing (WDM) method is for multiplexing and transmitting signal light having a number of different carrier optical wavelength in one optical fiber, and is a technique that is useful for increase of transmission capacity.

On the other hand, in conventional communication between points, service fixed to 64 kb/s that is the most basic unit of communication for signal transmission is collectively contained in a frame which is provided by a new synchronous network such as a SONET (Synchronous Optical Network)/SDH (Synchronous Digital Hierarchy), using a time multiplexing method. In order to efficiently conducting signal transmission, this new synchronous network is hierarchized into a pass layer, a line layer and a section layer. The collected services are contained in the pass layer. Furthermore, these pass signals are collected direction by direction along transmission and are contained in the line layer. In case that a transmission distance is long, since a regenerative relay of the signals is necessary on the way, the signals are contained in the section layer every signal regenerative relay interval, and finally, signal transmission is conducted by a physical medium such as an optical fiber.

A method of containing service is required to be in accordance with a format or a transmission speed provided in GR-CORE253 of Bellcore, for example. Also, in each layer, information for network management or control is added to the transmission signals as an overhead, and this is also required to be in accordance with the standard provided in the GR-CORE253 of Bellcore, for example.

However, in recent years, a demand for multimedia service which requires several Mb/s bands rapidly increases, and necessity of enlarging communication capacity of individual service has occurred. Accompanying this, a network which efficiently corresponds to various communication speeds or formats such as a video image, voice and a data is earnestly desired.

In case that this is provided as service using the new synchronous network, it is necessary that, by means of the time multiplexing method, the service is mapped into a frame of a format or a transmission speed provided by the new synchronous network and is transmitted between points. On the other hand, in case that multimedia service having various transmission speeds is always mapped into a fixed frame, it is necessary to, in accordance with a demand which continuously changes, reconstruct frames of the pass layer, the line layer and the section layer in response to the change. Also, in order to enlarge the transmission capacity, it is necessary to newly define a format and conduct standardization. Namely, from a controllability and flexibility standpoint, the new synchronous network is unsuitable for a network which handles various formats and transmission speeds.

Therefore, in order to efficiently provide multimedia service of which demand is rapidly increasing, it is essential to construct a service transfer network in which it is taken into account that the communication capacity occupied per service is large and the signal formats have variety, and these tendencies are much enhanced in a future.

Therefore, the objective of the present invention is to solve the above-mentioned task.

Also, the objective of the present invention is to provide a high reliable optical wave network system capable of economically and pliably handling multimedia service of which communication capacity per service is large and which has various formats and transmission speeds.

In order to achieve the above-described objective, an optical wave network system of the present invention is constructed as an optical wave network system having a hierarchy structure which includes a multimedia service layer for handling service such as at least video image communication, voice communication and data communication, an ATM layer, an optical layer utilizing a wavelength or spatial multiplex technique, and an optical fiber network layer.

In order to pliably handle the multimedia service of which communication capacity per service is large and which has various formats and transmission speeds, it is efficient to use a layer which does not depend on the formats or transmission speeds, instead of the new synchronous network layer. Accordingly, in the present invention, an ATM (Asynchronous Transfer Mode) technique and a wavelength multiplex technique are applied. And, in the ATM layer, the services of various formats and speeds, such as an video image, voice and a data, are bundled up to transmission speed of a degree of Gb/s. By utilizing this ATM layer, it becomes to be possible to pliably accommodate itself to a demand change regardless of the signal formats.

Also, in the optical layer utilizing the wavelength multiplex technique, services are allocated every wavelength path in which communication channels between points are allocated to each wavelength. Thereby, communication which does not depend on the signal formats or speeds can be realized between points connected to each other, without reconstructing a network. In other words, if points between which communication is conducted are not changed, it is not necessary to physically reconstruct the network even though a transmitted signal is continuously changed to a signal having various formats and speeds, such as a video image, voice and a data.

Therefore, it is not necessary to reconstruct the network every time the transmission speed is changed, and it is possible to simplify control. Also, it is not necessary to conduct standardization of the signal formats. Moreover, since a signal multiplied up to a degree of Gb/s is handled by the ATM layer, it is possible to economically conduct signal transmission by utilizing wide band characteristic of light. Also, by conducting logical control of network construction in the ATM layer and physical control of network construction in the optical layer, it becomes to be possible to efficiently deal with control of network trouble.

This and other objects, features and advantages of the present invention will become more apparent upon a reading of the following detailed description and drawings, in which:
Fig. 1 is a view showing an embodiment of an optical wave network system of the present invention;
Fig. 2 is a view showing one embodiment of an optical wave network system of the present invention; and
Fig. 3 is a view showing one example of network construction in the optical wave network system of the present invention.

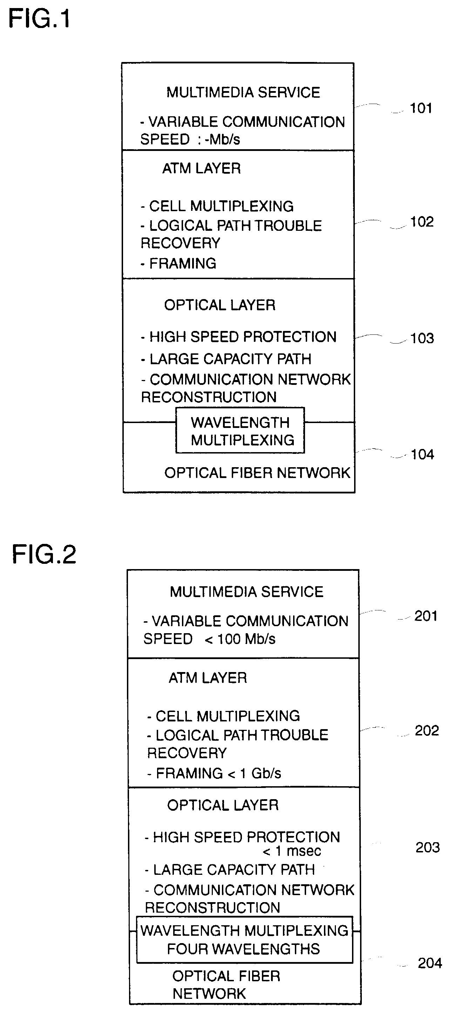

Fig. 1 shows an embodiment of an optical wave network system of the present invention. In Fig. 1, the optical wave network system is constructed of four layers of a multimedia service layer 101, an ATM layer 102, an optical layer 103, and an optical fiber network layer 104. The multimedia service layer 101 is a layer in which signals having transmission speeds up to an Mb/s order, such as an image, voice and a data, are mixed and exist. The transmission signals terminate at this layer and provides service to a user.

The ATM layer 102 contains the signals in logical transmission paths (VP: Virtual Paths) place by place where the signals go, and has a function for mapping the signals in an ATM cell. Also, the ATM layer has a function for conducting signal multiplexing up to an order of Gb/s utilizing a cell multiplexing technique. Moreover, the ATM layer monitors a trouble or quality of the VP in order to take measures for a logical trouble of the network, and in case that a VP connection trouble or signal deterioration occurs, the ATM layer has a function for logically recovering the trouble by reconstructing the network. Suitable constitution such as an ATM cross-connect system and an ATM switch can be adopted as a network element arranged for the ATM layer.

The optical layer 103 converts electric signals into optical signals having appropriate carrier wavelengths, and has a function for conducting multiplexing of optical signals having a plurality of carrier wavelengths, and allocates wavelengths connection by connection between points and conducts signal transmission every wavelength path. This layer is characterized in that there is no restriction in a format of a signal to be handled and that the layer does not depend on a transmission speed. Moreover, the optical layer monitors a trouble or quality of the wavelength paths, such as an optical signal strength and an optical noise strength wavelength path by path, in order to take measures for a physical trouble of the network, and in case that a wavelength path connection trouble or wavelength path deterioration occurs, the optical layer has a function for physically recovering the trouble at high speed by conducting high speed protection.

Also, by reconstructing the wavelength paths in response to a demand of network reconstruction, it is possible to physically reconstruct the network. Moreover, a function is included in which one or more than one optical signals are multiplied in an optical fiber and long distance optical transmission is physically conducted. If necessary, it is also possible to conduct regenerative relay the optical signals. The optical fiber network layer 104 is a layer for handling a physical medium for transmitting the optical signals.

Next, operation of the optical wave network system of the present invention will be explained by referring to Fig. 1. The services such as a video image, voice and a data having various transmission speeds and formats, which exists in the multimedia layer 101, is initially contained in the ATM layer 102 for conducting communication between points. In the ATM layer 102, these services are mapped to the ATM cell so as to flexibly deal with a change of the transmission speed or format. At this time, signal multiplexing is conducted by means of a cell multiplexing technique if necessary. Also, these signals are logically allocated to the VP place by place where the signals go, and the VP is bundled up to an order of Gb/s. This is for economically conducting management of the network by efficiently utilizing wide band characteristic of the optical layer for transmitting signals of the ATM layer.

In order to construct a highly reliable network, it is essential to be able to deal with an unexpected communication trouble. Accordingly, in the ATM layer 102, the management of the network is logically conducted. In other words, in case that trouble occurrence or signal quality deterioration is detected by monitoring a trouble or quality for every VP, it is possible to logically recover the network trouble by switching a circuit in use to a spare circuit or by reconstructing the network. Also, it is possible to reconstruct the VP not only when a trouble occurs but also when a demand occurs.

In the optical layer 103, signal transmission is conducted with physically large capacity and without depending on a format. In other words, the optical layer modulates electric signals from the ATM layer 102 to optical signals having appropriate wavelengths place by place where the signals go, and generates wavelength paths. In this optical layer, in case that trouble occurrence or signal quality deterioration is detected by monitoring a trouble or quality for every wavelength path which does not depends on a transmission speed or a format, the network trouble is physically recovered by switching a circuit in use to a spare circuit or by reconstructing the network. As a method of switching a using system to a spare system, an appropriate method such as a method in which an exclusive spare system is prepared and a place to which the using system is switched is previously set, or a method in which a spare system is shared by a plurality of wavelength pats can be adopted. Also, it is possible to reconstruct the wavelength paths not only when a trouble occurs but also when a demand occurs.

It is not necessary that the signals contained in the wavelength paths are restricted by the transmission speed or formats. These wavelength paths are bundled by means of a wavelength multiplexing technique and are supplied to the optical fiber layer 104. In the optical layer, wavelength multiplexing optical signals are transmitted a long distance from several hundreds kilometers to several thousands kilometers. Also, the optical layer has a function for conducting wavelength dispersion control, regenerative relay and optical amplification if necessary.

Fig. 2 shows one embodiment of the present invention, and a layer for handling an image, voice, a data and so forth having a signal band up to 100 Mb/s at the maximum is used as a multimedia service layer 201, a layer for allocating services to VP and bundling the services up to 1 Gb/s at the maximum is used as an ATM layer 202, and a layer for conducting optical fiber communication over one thousand kilometers while conducting optical regenerative relay amplification every one hundred kilometers by means of optical channels having different four wavelengths is used as an optical layer 203. In other words, the wavelength paths terminate one thousand kilometers.

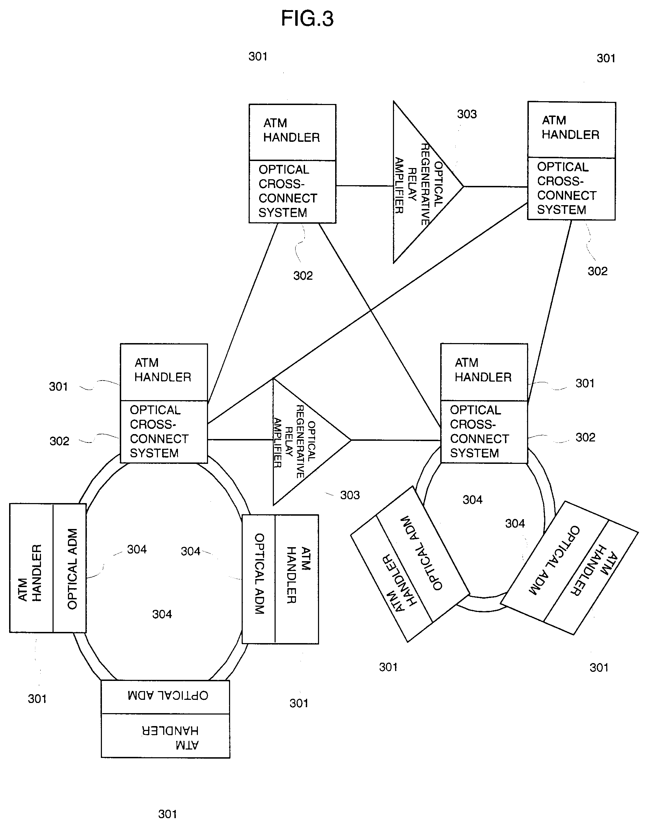

Fig. 3 shows one example of a network arrangement in the optical wave network system of the present invention. An ATM handler 301 for mapping each service of video image, voice and data signals having various transmission speeds and formats to an ATM cell, allocating the VP thereto and bundling the VP up to 1 Gb/s at the maximum is arranged in the ATM layer 202 as a network element. The bundled signals are electric signals having various transmission speeds less than or equal to 1 Gb/s, and although the transmission speed and the contents of services (signal formats) are continuously changed in accordance with a demand, by mapping the services to the ATM cell, it is possible to flexibly handle the services of which transmission speeds and formats are not restricted.

The ATM handler 301 has a function for recovering a logical transmission path trouble by monitoring a trouble or quality for every VP. Accordingly, it becomes to be possible to conduct logical management or control of the network by allocating the VP and to recover a trouble of the network. Also, it is possible to reconstruct the network by switching the VP in case that a demand occurs.

The bundled VP signals are converted to optical signals from electric signals and are applied to the optical layer. At this time, different carrier wavelengths are allocated to transmission and reception ends, and wavelength paths are formed. Since there is no restriction for a transmission speed or format in the signals contained in the wavelength paths, it is not necessary to reconstruct the network even though the contents of a service demand between points in the multimedia service layer 201 change. Also, since communication capacity of the individual wavelength paths is large, it is possible to deal with provision of services with large capacity, such as video image (dynamic image) service.

An optical cross-connect system 302, an optical ADM (Add Drop Multiplexer) 303 and an optical regenerative relay amplifier 304 are provided with the optical layer 203 as network elements. The optical cross-connect system 302 and the optical ADM 303 monitor a trouble or quality for every wavelength path, and are constructed so as to, in case that a trouble occurs, be able to recover the trouble with high speed by switching a using system to a spare system with a speed less than 1 msec. A method which does not depend on a transmission speed and format is used in this monitoring of the wavelength paths.

Also, the optical cross-connect system 302 can reconstruct the network by switching the connections of the wavelength paths in case that switching of the wavelength paths is demanded. In response to a demand, the optical ADM 303 can select the wavelength paths to be added and the wavelength paths to be dropped. The optical regenerative relay amplifier 304 has a function for optically amplifying optical signals collectively which are multiplied one or more than one wavelengths. Thereby, it is possible to economically conduct long distance optical communication over one thousand kilometers.

In addition, the present invention is not limited to the above-described embodiments, and arbitrary signals such as an internet and an MPEG can be an object as the service which the multimedia service layer handles, and 500 Mb/s, 10 Gb/s and 20 Gb/s and so forth can be suitably selected as the maximum band to which the VP is bundled in the ATM layer. Also, the network can be constructed by using only the optical cross-connect system as a network element arranged in the optical layer, and also, the carrier wavelengths used in the optical layer are not limited to four wavelengths, and the suitable number of wavelengths such as eight wavelengths, sixteen wavelengths and thirty two wavelengths can be adopted.

Moreover, the carrier wavelengths of the wavelength paths may be ones which are the same at transmission and reception terminal ends, and virtual wavelength paths can be used, in which an optical signal transmitted with a wavelength 1 is converted to a signal with a wavelength 2 in the network and the wavelength 2 is converted to the wavelength 1 again and received. At that time, there is no restriction in the number of the wavelengths which are converted in the network or times the conversion. Also, there is no restriction in a distance at which the wavelength paths terminate and the distance may be five thousands kilometers or ten thousands kilometers, and also, there is no restriction in an interval at which the optical regenerative relay amplifier 304 is arranged and the optical regenerative relay amplifier can be arranged every fifty kilometers or at an irregular interval such as fifty kilometers, one hundred kilometers and one hundred and fifty kilometers.

In the present invention, since, by containing services having various transmission speeds and formats within the VP in the ATM layer and storing the services in the wavelength paths of the optical layer, characteristic of independence of a transmission speed or format of a wavelength multiplexing optical communication technique is utilized, it is possible to construct an optical wave network which does not depend on the transmission speed and format, and also, since it is possible to easily deal with an entrance of service of a new format in a future or increase of capacity which is occupied by individual services, the present invention has superior expandability.

Moreover, since it is possible to conduct optical fiber communication with high throughput by utilizing a wavelength multiplexing technique in the optical layer, the present invention is appropriate for large capacity optical communication.

Furthermore, even though the contents of a service demand between points continuously change, signals contained in the wavelength paths of the optical layer do not depend on the transmission speed and format. Accordingly, since it is not necessary to reconstruct the network following the change of the contents of the service demand, it is possible to simplify network control in the communication between points.

Moreover, since the logical control is conducted in the ATM layer and the physical control is conducted in the optical layer, correspondence between the objects to be controlled and the layers is clear, and control and management of the network are easy.

Furthermore, since, in the optical layer, the wavelength paths of the using system are physically switched to the wavelength paths of the spare system, it becomes to be possible to recover a network trouble at high speed.

The entire disclosure of Japanese Patent Application No. 9-268254 filed on September 16, 1997 including specification, claims, drawing and summary are incorporated herein by reference in its entirety.

## Claims

1. An optical wave network system having hierarchy structure which comprises a multimedia service layer for handling services of communication including at least a video image, voice and a data, an ATM layer, an optical layer utilizing a wavelength or spatial multiplexing technique, and an optical fiber network layer,
said ATM layer having means for bundling said services handled by said multimedia service layer and storing said bundled services in virtual paths,
said optical layer having means for converting electric signals from said ATM layer to optical signals having appropriate carrier wavelengths and forming wavelength paths for every terminal end of said optical signals, which do not depend on a transmission speed and format, and means for conducting wavelength multiplexing of said wavelength paths having one or more than one different carrier wavelengths direction by direction of transmission.

2. An optical wave network system according to claim 1, wherein said ATM layer has means for electrically bundling said virtual paths up to an order of Gb/s.

3. An optical wave network system according to claim 1, or 2, wherein said ATM layer has means for monitoring a logical path connection trouble or quality for every said virtual path, and for, in case that a trouble or deterioration occurs, recovering a network trouble by logically conducting network reconstruction or by switching said paths of a using system to paths of a spare system.

4. An optical wave network system according to any of claims 1 to 3, wherein said optical layer has means for monitoring a physical path connection trouble or quality for every said wavelength path by means of a method which does not depend on a transmission speed or format contained in said wavelength paths, and for, in case that a trouble or deterioration occurs in said wavelength paths, physically recovering a network trouble by switching said wavelength paths of a using system to predetermined exclusive wavelength paths of a spare system at high speed.

5. An optical wave network system according to any of claims 1 to 3, wherein said optical layer has means for monitoring a physical path connection trouble or quality for every said wavelength path by means of a method which does not depend on a transmission speed or format contained in said wavelength paths, and for, in case that a trouble or deterioration occurs in said wavelength paths, physically recovering a network trouble by switching at high speed said wavelength paths of a using system to wavelength paths of a spare system which is shared by a plurality of wavelength paths.

6. An optical wave network system according to any of claims 1 to 5, wherein said optical layer has means for physically reconstructing a network by reconstructing wavelength path connecting condition.

7. An optical wave network system according to any of claims 1 to 6, wherein said optical layer has means for conducting long distance optical communication using an optical fiber as a physical medium by conducting optical regenerative relay amplification and wavelength dispersion control for every wavelength path.

8. An optical wave network system according to any of claims 1 to 7, wherein said optical layer has means for forming virtual wavelength paths by conducting one or more than one wavelength conversion between terminal ends of said wavelength paths.

9. An optical wave network system according to claim 8, wherein said optical layer has means for monitoring a physical path connection trouble or quality for every said wavelength path or virtual wavelength path by means of a method which does not depend on a transmission speed or format contained in said wavelength paths or virtual wavelength paths, and for, in case that a trouble or deterioration occurs in said wavelength paths or virtual wavelength paths, physically recovering a network trouble by switching said wavelength paths or virtual wavelength paths of a using system to predetermined exclusive wavelength paths or virtual wavelength paths of a spare system at high speed.

10. An optical wave network system according to claim 8, wherein said optical layer has means for monitoring a physical path connection trouble or quality for every said wavelength path or virtual wavelength path by means of a method which does not depend on a transmission speed or format contained in said wavelength paths or virtual wavelength paths, and for, in case that a trouble or deterioration occurs in said wavelength paths or virtual wavelength paths, physically recovering a network trouble by switching at high speed said wavelength paths or virtual wavelength paths of a using system to wavelength paths or virtual wavelength paths of a spare system which is shared by a plurality of wavelength paths.

11. An optical wave network system according to any of claims 8 to 10, wherein reconstruction of wavelength path connecting condition and monitoring of a trouble or quality of said wavelength paths in said optical layer are conducted by using an optical cross-connect system or an optical ADM.

12. An optical wave network system according to any of claims 8 to 10, wherein reconstruction of wavelength path or virtual wavelength path connecting condition and monitoring of a trouble or quality of said wavelength paths or virtual wavelength paths in said optical layer are conducted by using an optical cross-connect system or an optical ADM.

13. A method of constructing an optical wave network system having hierarchy structure which comprises a multimedia service layer for handling services of communication including at least a video image, voice and a data, an ATM layer, an optical layer utilizing a wavelength or spatial multiplexing technique, and an optical fiber network layer, said method comprising steps of:
by means of said ATM layer, bundling said services handled by said multimedia service layer and storing said bundled services in virtual paths,
by means of said optical layer, converting electric signals from said ATM layer to optical signals having appropriate carrier wavelengths and forming wavelength paths for every terminal end of said optical signals, which do not depend on a transmission speed and format, and conducting wavelength multiplexing of said wavelength paths having one or more than one different carrier wavelengths direction by direction of transmission.

14. A method of constructing an optical wave network system according to claim 13, wherein said ATM layer electrically bundles said virtual paths up to an order of Gb/s.

15. A method of constructing an optical wave network system according to claim 13 or 14, wherein said ATM layer monitors a logical path connection trouble or quality for every said virtual path, and in case that a trouble or deterioration occurs, recovers a network trouble by logically conducting network reconstruction or by switching said paths of a using system to paths of a spare system.

16. A method of constructing an optical wave network system according to any of claims 13 to 15, wherein said optical layer monitors a physical path connection trouble or quality for every said wavelength path by means of a method which does not depend on a transmission speed or format contained in said wavelength paths, and in case that a trouble or deterioration occurs in said wavelength paths, physically recovers a network trouble by switching said wavelength paths of a using system to predetermined exclusive wavelength paths of a spare system at high speed.

17. A method of constructing an optical wave network system according to any of claims 13 to 15, wherein said optical layer monitors a physical path connection trouble or quality for every said wavelength path by means of a method which does not depend on a transmission speed or format contained in said wavelength paths, and in case that a trouble or deterioration occurs in said wavelength paths, physically recovers a network trouble by switching at high speed said wavelength paths of a using system to wavelength paths of a spare system which is shared by a plurality of wavelength paths.

18. A method of constructing an optical wave network system according to any claims 13 to 17, wherein said optical layer physically reconstructs a network by reconstructing wavelength path connecting condition.

19. A method of constructing an optical wave network system according to any of claims 13 to 18, wherein said optical layer conducts long distance optical communication using an optical fiber as a physical medium by conducting optical regenerative relay amplification and wavelength dispersion control for every wavelength path.

20. A method of constructing an optical wave network system according to any of claims 13 to l9, wherein said optical layer forms virtual wavelength paths by conducting one or more than one wavelength conversion between terminal ends of said wavelength paths.

21. A method of constructing an optical wave network system according to claim 20, wherein said optical layer monitors a physical path connection trouble or quality for every said wavelength path or virtual wavelength path by means of a method which does not depend on a transmission speed or format contained in said wavelength paths or virtual wavelength paths, and in case that a trouble or deterioration occurs in said wavelength paths or virtual wavelength paths, physically recovers a network trouble by switching said wavelength paths or virtual wavelength paths of a using system to predetermined exclusive wavelength paths or virtual wavelength paths of a spare system at high speed.

22. A method of constructing an optical wave network system according to claim 20, wherein said optical layer monitors a physical path connection trouble or quality for every said wavelength path or virtual wavelength path by means of a method which does not depend on a transmission speed or format contained in said wavelength paths or virtual wavelength paths, and in case that a trouble or deterioration occurs in said wavelength paths or virtual wavelength paths, physically recovers a network trouble by switching at high speed said wavelength paths or virtual wavelength paths of a using system to wavelength paths or virtual wavelength paths of a spare system which is shared by a plurality of wavelength paths.

23. A method of constructing an optical wave network system according to any of claims 20 to 22, wherein reconstruction of wavelength path connecting condition and monitoring of a trouble or quality of said wavelength paths in said optical layer are conducted by using an optical cross-connect system or an optical ADM.

24. A method of constructing an optical wave network system according to any of claims 20 to 22, wherein reconstruction of wavelength path or virtual wavelength path connecting condition and monitoring of a trouble or quality of said wavelength paths or virtual wavelength paths in said optical layer are conducted by using an optical cross-connect system or an optical ADM.
